# EUROPEAN PATENT APPLICATION

(11) **EP 4 703 413 A1**
(43) Date of publication of application: **04.03.2026**
(21) Application number: 24315397.0
(22) Date of filing: 29.08.2024
(51) Int. Cl.: C08J 9/12, B29C 44/34, C08J 9/18, C08J 9/232, C08J 9/00

(54) **PRE-EXPANDED POLYMER BEADS, A METHOD FOR PRODUCING SUCH BEADS, A PARTICULATE POLYMER MATERIAL COMPOSITION COMPRISING SUCH BEADS, A METHOD OF PROCESSING SUCH BEADS TO PRODUCE A PART, AND A MOLDED PART RESULTING FROM SUCH A METHOD**

(71) Applicant: JSP International SARL, 60190 Estrées-Saint-Denis (FR); JSP Corporation, Tokyo 100-0005 (JP)
(72) Inventor: LE GUILLERME, Béatrice, 60190 Estrées-Saint-Denis (FR); KOPF, Valentin, 60190 Estrées-Saint-Denis (FR); HIRA, Akinobu, Tokyo (JP)
(74) Representative: Hafner & Kohl PartmbB

(57) **Abstract**

The invention relates to pre-expanded polymer beads, comprising a cellular structure, a method for producing such beads, a particulate polymer material composition comprising such beads, a method of processing such beads to produce a part, and a molded part resulting from such a method. Particularly, the invention relates to pre-expanded polyolefin beads, comprising a cellular structure, a method for producing such beads, a particulate polymer material composition comprising such beads, a method of processing such beads to produce a part, and a molded part resulting from such a method.

## Description

The invention relates to pre-expanded polymer beads, comprising a cellular structure, a method for producing such beads, a particulate polymer material composition comprising such beads, a method of processing such beads to produce a part, and a molded part made in accordance with such a method. Particularly, the invention relates to pre-expanded polyolefin beads, comprising a cellular structure, a method for producing such beads, a particulate polymer material composition comprising such beads, a method of processing such beads to produce a part, and a molded part made in accordance with such a method.

Respective pre-expanded polymer beads, comprising a cellular structure, hereinafter briefly referred to as "beads", are generally known. Respective beads can be based on a polyolefin material, such as, e.g. polyethylene (PE) and/or polypropylene (PP), for instance.

Typical properties of respective beads are their low density while maintaining characteristics such as, e.g. flexibility and shock absorbing properties, which makes respective beads useful for producing light-weight parts for multiple applications. As non-limiting examples, respective parts can be parts to be used in building and construction, vehicles, particularly cars, sporting goods, etc.

Respective beads typically, undergo an initial expansion process, typically in an extrusion-expansion process or an autoclave expansion batch process, sometimes also denoted "first pass", followed by a further (pre-)expansion process, sometimes also denoted "second pass", in which they are transformed into lightweight expanded beads before they are processed, e.g. by molding, to produce respective parts. The further expansion process is conventionally performed by heating the first pass expanded beads with steam, facilitating the expansion of the gas within the cells of the beads. However, this method necessitates the use of superheated steam, leading to significant energy consumption, investment in specialized under-pressure lines, and the need for qualified personnel to operate said under-pressure lines.

In the recent years, processes for the further expansion of polymer beads have been developed to improve the sustainability of the conventional steam-based further expansion process, in particular, processes in which the polymer beads are subject to a thermal energy input generated by irradiating the beads with thermal radiation, such as, e.g. infrared radiation.

When processing polymer beads in a respective further expansion process, it is of high importance that the polymer beads are subject to a specific energy input and absorb sufficient energy to undergo the further expansion. Experiments have shown that the absorption properties of the polymer beads can have a significant influence on their expansion properties and, as a consequence, also other properties, such as, e.g. the basic shape, of the resulting (pre-)expanded beads.

For processing respective beads to produce high-quality parts in efficient manner, the basic shape of respective beads is of high importance because the basic shape will affect parameters of the production process, such as, e.g. the filling properties of the respective beads in a mold used for molding a part. Particularly, the filling properties can be generally improved by processing beads having a substantially spherical shape.

Moreover, and although said processes can enhance the sustainability of the pre-expansion process, there still remains a desire for further improvements in producing beads that enable the production of molded articles with reduced cycle time and increased production efficiency when they are processed, e.g. by molding, to produce respective parts.

As such, there is a need for beads which improve at least some of the aspects mentioned above.

A central object of the invention is thus, to provide improved pre-expanded polymer beads, comprising a cellular structure. The improvement of the pre-expanded polymer beads, comprising a cellular structure, should particularly, enable improvements in respective further manufacturing processes.

This object is achieved by the subject-matter of the independent Claims.

A first aspect of the invention relates to pre-expanded polymer beads, hereinafter briefly referred to as "beads". The beads comprise a cellular structure. Due to their cellular structure, which means that each bead comprises an outer shell or outer wall, respectively and a plurality of cells, particularly closed cells, within that outer shell or outer wall, respectively, the beads can also be deemed or denoted pre-foamed beads. The beads typically, have been expanded in a (further) expansion process, typically denoted "second pass", in which they have been subject to an energy input, particularly a thermal energy input, more particularly a thermal energy input generated by irradiating the beads with thermal radiation, such as, e.g. infrared radiation. As such, the cellular structure of the beads typically, is defined in the (further) expansion process, which the beads have undergone in connection with a respective second pass.

Notably, before the beads have undergone a respective (further) expansion process (second pass), the beads have been produced in an initial expansion process (first pass) by expanding raw material beads, particularly compact (non-expanded) raw material beads, e.g. under influence of temperature and/or pressure, e.g. in an autoclave. In other words, the beads specified herein have undergone both a respective initial expansion process (first pass) and a further expansion process (second pass).

The beads have a spherical basic shape. The spherical basic shape of the beads is defined by a sphericity φ of more than 0.94 and less than 1 (or 1.0), respectively. The beads thus, generally show a high sphericity. The basic shape of the beads can be close to a geometrically defined perfect sphere but is not a perfect sphere. As will be apparent from below, the basic shape of the beads can, at least when viewed in a cross-sectional view, comprise one or more planar wall portions which results in that the shape of the beads is not a perfect sphere. In other words, the presence of respective one or more planar wall portions results in that the beads have a sphere-like shape which can be understood as a shape which deviates from the shape of a perfect sphere. The deviation from the shape of a perfect sphere is indicated by the value of the sphericity which ranges, as mentioned before, between 0.94 and 1 (or 1.0), respectively. The sphericity of the beads can be measured using a particle size distribution measuring device (e.g. the Microtrac PartAn 3D available from Nikkiso Co. Ltd., Japan), for instance. The number of beads used for the measurement should be, for example, 2000 or more.

Further, the beads have an angle of repose between 31.0° and 50.0° measured in accordance with ISO 4324. As such, typically each of the beads has or results in an angle of repose between 31.0° and 50.0°. The angle of repose, or critical angle of repose, is commonly defined as the steepest angle at which beads can accumulate beneath a funnel without collapsing, measured as the slope of the pile relative to the horizontal surface on which it rests. The angle of repose can be at least an indirect result of the aforementioned basic shape of the beads. In other words, the aforementioned basic shape of the beads can influence the angle of repose of the beads. In particular, the presence of the aforementioned one or more planar wall portions can influence the angle of repose of the beads.

As indicated above, the angle of repose of the beads is measured in accordance with ISO 4324 which is available at https://www.dinmedia.de/en/standard/iso-4324/628873, for instance. An apparatus for measuring the angle of repose according to ISO 4324 is available from Landgraf Laborsysteme HLL GmbH, Magdeburger Straße 3, 30855 Langenhagen, Germany (see URL: https://www.hallflowmeter.de/12/158/AD223/TDUwNTY2M Dcw/223-L50566070-landgraf-hll.html?sid=c69jj62j69pkptk4asdegi3s37), for instance. To prevent the undesired effects of static electricity on the measurement, the apparatus can be grounded and an ionizing gun can be used to remove the excess static electricity remaining on the surface of the beads. An ionizing gun is available under the reference 8193 Gen4^{®} Ion Air Gun from the company EXAIR LLC (11510 Goldcoast Drive, Cincinnati, Ohio 45249-1621, USA), for instance.

Experiments have shown that the combination of the sphericity between 0.94 and less than 1 and the angle of repose ranging between 31.0° and 50.0° surprisingly results in improved properties of the beads with respect to their further processing behavior, particularly their molding behavior. Particularly, the molding behavior of the beads in a respective molding process in which the beads are filled into a mold cavity and are then, e.g. by application of thermal energy, particularly by steam, combined to form a part, can be improved which is believed to be based on the shape of the beads.

Indeed, while the sphericity of the beads indicates that the beads show good flowability and are of an appealing appearance to the naked eye, the high angle of repose of the beads facilitates that the beads can arrange themselves in a different way relative to conventional beads within a molding tool, for instance by creating specific voids channels in between the beads. It is believed that the presence of such voids can allow for a quicker balance of the pressure within the molding tool during the molding step compared to the atmosphere outside the molded part, therefore enabling a shorter cycle time during the molding process.

According to an exemplary embodiment, the beads can have a sphericity having a lower limit of 0.95 or 0.96, for instance. Hence, the beads can have a sphericity ranging between 0.95 or 0.96 and 1, for instance.

According to a further exemplary embodiment, the beads can have an angle of repose ranging between a lower limit which can be at least one of: 31.5°, 32.0°, 32.5°, 33.0°, 33.5°, 34.0°, 34.5°, 35.0°, 35.5°, 36.0°, 36.5°, or 37.0°, for instance and an upper limit which can be at least one of: 49.5°, 49.0°, 48.5°, 48.0°, 47.5°, 47.0°, 46.5°, 46.0°, 45.5°, 45.0°, 44.5°, 44.0°, 43.5°, 43.0°, 42.5°, 42.0°, 41.5°, 41.0°, 40.5° or 40.0°, for instance. Hence, the beads can have an angle of repose between 33.0° and 45.0°, for instance. As mentioned before, 33.0° is an exemplary lower limit of an angle of repose interval and 45.0° is an exemplary upper limit of an angle of repose interval. As such, the beads can comprise a wide range of angles of repose which means that there is high flexibility with respect to their behavior and related properties of the beads in respective further expansion processes and/or molding processes. All of the aforementioned values are measured in accordance with ISO 4324.

According to a further exemplary embodiment, the beads can have a density ranging between a lower limit which can be at least one of: 10 kg/m³, 11 kg/m³, 12 kg/m³, 13 kg/m³, 14 kg/m³, 15 kg/m³, 16 kg/m³, 17 kg/m³, 18 kg/m³, 19 kg/m³, for instance and an upper limit which can be at least one of: 60 kg/m³, 59 kg/m³, 58 kg/m³, 57 kg/m³, 56 kg/m³, 55 kg/m³ 54 kg/m³, 53 kg/m³, 52 kg/m³, 51 kg/m³, 50 kg/m³, 49 kg/m³, 48 kg/m³, 47 kg/m³, 46 kg/m³, 45 kg/m³, 44 kg/m³, 43 kg/m³, 42 kg/m³, 41 kg/m³, 40 kg/m³, 39 kg/m³, 38 kg/m³, 37 kg/m³, 36 kg/m³, 35 kg/m³, 34 kg/m³, 33 kg/m³, 32 kg/m³, 31 kg/m³, 30 kg/m³, 29 kg/m³, 28 kg/m³, 27 kg/m³, 26 kg/m³, 25 kg/m³, 24 kg/m³, 23 kg/m³, 22 kg/m³, 21 kg/m³, 20 kg/m³ for instance. Hence, the beads can have a density ranging between 12 and 40 kg/m³, for instance. As such, the beads can comprise a wide range of densities which means that there is high flexibility with respect to their behavior and related properties of the beads in respective further expansion processes and/or molding processes. The density of the beads can be determined as follows: an amount of beads is placed in the measuring cylinder with a volume of 1 liter, a large number of the beads are accommodated up to a scale of 1 liter so as to be in a natural deposition state, a mass W2 [g] of the accommodated beads is divided by an accommodation volume V2 (1 liter) (W2/V2), and the unit is converted to kg/m³, such that the bulk density of the beads is obtained.

The density of the beads can also be related with an expansion ratio of the beads which typically, comprises an expansion factor ranging between 10 to 100, for instance. Hence, the beads can have an expansion ratio ranging between 10 to 100, particularly between 20 and 80, more particularly between 25 and 75, for instance, which also indicates the low density of the beads which makes them suitable e.g. for manufacturing lightweight parts. The expansion ratio of the beads is a value obtained by dividing the density [kg/m³] of the polymer resin constituting the beads by the bulk density [kg/m³] of the beads.

According to a further exemplary embodiment, the beads can comprise a polymer base material (polymer base resin) and at least one additive. Hence, the beads can be made of a polymer base material and at least one additive. The polymer base material can be or comprise at least one polyolefin, such as, e.g. polyethylene (PE) or polypropylene (PP). The polymer base material can represent a matrix within which the at least one additive is provided. The at least one additive can be or comprise a particulate material, for instance. The at least one additive can be a functional additive which can provide the beads with at least one specific function or property, respectively, such as, e.g. a cell nucleating function or property, a flame retarding function or property, a thermally conductive function or property, an electrically conductive function or property, a magnetic function or property, a light absorbing function or property, etc. Hence, the at least one additive can be or comprise a cell nucleating additive, a flame retarding additive, a thermally conductive additive, an electrically conductive additive, a magnetic additive, a light absorbing additive, for instance.

According to a further exemplary embodiment, the beads can thus, comprise a polymer base material and at least one light absorbing additive which enables light absorption. Particularly, the at least one light absorbing additive can be configured to absorb light in the infrared wavelength regime. As such, the at least one light absorbing additive can be configured to absorb light in a wavelength ranging from 750 nm - 8 µm, particularly 1 µm - 4 µm, for instance. The wavelength range of 750 nm - 8 µm, particularly 1 µm - 4 µm, is particularly selected because it typically, corresponds to the infrared wavelengths implemented in a further expansion process which result in a very high efficiency when used in the further expansion process.

As such, the at least one light absorbing additive can exhibit a high light absorption, which can be at least 50%, particularly at least 55%, more particularly at least 60%, more particularly at least 65%, more particularly at least 70%, more particularly at least 75%, more particularly at least 80%, more particularly at least 85%, more particularly at least 90%, for light in a wavelength ranging from 750 nm - 8 µm, particularly 1 µm - 4 µm, for instance. Notably, light having wavelength in a wavelength regime ranging from 750 nm - 8 µm, particularly 1 µm - 4 µm, is typically, used in respective further expansion processes in which the beads are subject to infrared radiation to trigger a further expansion of the beads. As such, the light absorbing properties of the at least one light absorbing additive can be particularly, chosen with respect to respective further expansion processes of the beads. The method of measurement of the light absorption of the at least one light absorbing additive is not particularly specified, but can include techniques such as spectrophotometry, where the absorption of light across a specified wavelength range is measured using a UV-Vis-NIR or a Fourier-transform infrared (FTIR) spectrophotometer.

Generally, the at least one light absorbing additive can exhibit a higher absorption for electromagnetic energy in the infrared wavelength regime as the polymer base material. Particularly, the at least one light absorbing additive can exhibit an absorption for electromagnetic energy in the infrared wavelength regime which is at least 10%, particularly at least 15%, more particularly at least 20%, more particularly at least 25%, more particularly at least 30%, more particularly at least 35%, more particularly at least 40%, more particularly at least 45%, more particularly at least 50%, more particularly at least 55%, more particularly at least 60%, more particularly at least 65%, more particularly at least 70%, more particularly at least 75%, more particularly at least 80%, more particularly at least 85%, more particularly at least 90%, more particularly at least 95%, more particularly at least 100%, higher than the absorption properties of the polymer base material in the respective wavelength regime.

According to a further exemplary embodiment, the at least one light absorbing additive can be present in a range between a lower limit which can be at least one of: 0.1 wt.-%, 0.2 wt.-%, 0.3 wt.-%, 0.4 wt.-%, 0.5 wt.-%, 0.6 wt.-%, 0.7 wt.-%, 0.8 wt.-%, 0.9 wt.-%, 1.0 wt.-%, 1.5 wt.-%, 2.0 wt.-%, , for instance and an upper limit which can be at least one of: 20.0 wt.-%, 15.0 wt.-%, 12.5 wt.-%,10.0 wt.-%, 9.5 wt.-%, 9.0 wt.-%, 8.5 wt.-%, 8.0 wt.-%, 7.5 wt.-%, 7.0 wt.-%, 6.5 wt.-%, or 6.0 wt.-%, for instance. As such, the at least one light absorbing additive can be present in an amount ranging between 0.1 wt.-% and 10.0 wt.-%, for instance.

According to a further exemplary embodiment, the at least one light absorbing additive can be or comprise one or more organic and/or inorganic pigments (dyes) or one or more combinations of organic and/or inorganic pigments (dyes) differing in at least one chemical and/or physical parameter, for instance. As such, the at least one light absorbing additive can generally be or comprise pigments which are configured to absorb light of a specific wavelength regime, which is, as is apparent from above, typically, a wavelength regime comprising wavelengths between 750 nm and 8 µm, particularly 1 µm - 4 µm.

Inorganic pigments can include, for example, chromates such as, e.g. lead chromate (yellow), zinc chromate (yellow), and barium chromate (yellow), ferrocyanides such as Prussian blue (dark blue), sulfides such as cadmium sulfide (yellow) and cadmium selenide (red), oxides such as iron oxide (red, yellow, brown), titanium dioxide (white) and silicates such as ultramarine blue. Organic pigments can include, for example, azo pigments, such as mono-azo pigments, di-azo pigments, azo lakes, and condensed azo pigments, polycyclic pigments such as phthalocyanines (blue and green), anthraquinones (red), perylenes (red), perinones (orange), thioindigo (violet), quinacridone (red), dioxazine (violet), isoindolinones (yellow), and quinophthalones (yellow).

According to a further exemplary embodiment, the at least one light absorbing additive can be or comprise a black inorganic pigment comprising carbon particles. Black inorganic pigment can include, for example, one or more materials selected from carbon black, conductive carbon, graphene, graphite, carbon nano-structures, such as e.g. tubes, layers, etc.

According to a concrete exemplary embodiment, the at least one light absorbing additive is or comprises carbon black. Carbon black is not only useful because it exhibits high absorption in the wavelength regime comprising wavelengths between 750 nm and 8 µm, particularly 1 µm - 4 µm, but also because it is a highly available and comparatively cost-effective material whose processing properties, particularly its superior dispersibility in polymer resins, in connection with respective beads are generally well understood. Non-limiting examples of carbon black include channel black, roller black, furnace black, thermal black, acetylene black, and Ketjen black.

However, one or more light absorbing additives other than carbon black can be used additionally or alternatively.

Other exemplary light absorbing additives which are not pigments can be conceived as well, such as dedicated near-infrared absorbers, for instance. Non-limiting examples of near-infrared absorbers include metal oxides and sulfides such as tungsten oxides, tin oxides, antimony oxides, lead sulfide, or mixture and/or compounds thereof.

As indicated above, the beads comprise an outer shell or outer wall, respectively and a plurality of cells within that outer shell or outer wall, which results in their cellular structure.

According to a further exemplary embodiment, at least some of the beads, particularly substantially all of the beads, can comprise at least one substantially planar wall portion, wherein the at least one substantially planar wall portion extends between two lateral wall portions. As such, the spherical basic shape of the beads can comprise at least one substantially planar wall portion, wherein the at least one substantially planar wall portion extends between two lateral wall portions. In connection with a respective planar wall portion, the expression "substantially" can mean that the respective wall portion can be approximated by a substantially straight line at least from a macroscopic perspective. A respective substantially planar wall portion can be particularly, apparent from a cross-sectionally cut-view of a respective bead. Respective lateral wall portions can be at least partially curved and/or at least partially straight portions extending off a respective substantially planar wall portion.

A respective substantially planar wall portion can result from the fact that the beads have been subject to a further expansion process (second pass) in which the beads have been irradiated with thermal radiation while being placed on and supported by, respectively a (substantially) planar structure, such as, e.g. a conveying structure.

According to a further exemplary embodiment, the at least two wall portions of a respective bead can extend at an angle relative to the at least one substantially planar wall portion of the respective bead. The angle can range between 90° and 160°, particularly between 95° and 150°, more particularly between 100° and 140°, for instance.

According to a further exemplary embodiment, the at least one substantially planar wall portion of a respective bead can have a length extension of between 150 µm and 7000 µm, particularly between 500 µm and 4000 µm, more particularly between 750 µm and 3500 µm, more particularly between 1000 µm and 3000 µm, for instance. The length extension of the at least one substantially planar wall portion typically, corresponds to the distance between the opposing free ends of the at least one substantially planar wall portion.

According to a further exemplary embodiment, the at least one substantially planar wall portion of a respective bead can comprise an extension which corresponds to between 20 and 80%, particularly between 22 and 75%, more particularly between 25 and 70%, more particularly between 27 and 65%, more particularly between 30 and 60%, of the parallel diameter of the bead. The parallel diameter of the respective bead corresponds to the line passing through the center of the cross-section that bisects the respective bead and which extends parallel to the at least one substantially planar wall portion.

The evaluation of the aforementioned dimension of the beads can be performed using a microscope VHX-6000 which is available from the company Keyence Corporation (1-3-14 Higashinakajima Higashiyodogawa-Ku. 533-8555, Osaka, Japan), for instance.

According to a further exemplary embodiment, the beads can be made from a polyolefin-based resin or from a polyamide-based resin. The term "polyolefin-based resin" particularly refers to polypropylene-resin, polyethylene-resin, and a mixture of two or more kinds while the term "polyamide-based resin" particularly refers to a polyamide-resin. In particular, the beads can comprise at least 50%, particularly at least 55%, more particularly at least 60%, more particularly at least 65%, more particularly at least 70%, more particularly at least 75%, more particularly at least 80%, more particularly at least 85%, more particularly at least 90%, more particularly at least 95% or even 100% of at least one polyolefin-resin, such as, e.g. a polyethylene-resin or a polypropylene-resin or of at least one polyamide-resin.

A polyolefin-resin can refer to a polyolefin homopolymer or a polyolefin copolymer, respectively. A polyolefin homopolymer can be based on or comprise at least one polyethylene-resin or at least one polypropylene-resin, such as isotactic polypropylene, syndiotactic polypropylene, and atactic polypropylene, for instance.

A polyolefin copolymer can be based on or comprise at least one ethylene-based copolymer and/or at least one propylene-based copolymer, for instance. Copolymers can be or comprise e.g. random copolymers or block copolymers, wherein random copolymers are particularly preferred.

The method of producing a respective polyolefin-resin is not particularly limited. Particularly, catalyst systems such as Ziegler-Natta based polymerization catalyst or metallocene-based polymerization catalysts or other catalyst systems are conceivable for producing a respective polyolefin-resin, for instance.

A polyamide-resin can refer to a polyamide homopolymer or a polyamide copolymer, respectively. A polyamide homopolymer can be based on or comprise at least one polyamide. A polyamide copolymer can be based on or comprise different polyamide-resins, for instance. A polyamide copolymer refers to a copolymer having two or more repeating units, with at least a part of the repeating units having an amide bond. Although the polyamide copolymer may be a block copolymer including a combination of a sequence of a certain quantity of the same repeating unit of amide and a sequence of a certain quantity of a different amide, or a random copolymer including different amides each randomly repeating, a random copolymer is preferred. If the polyamide copolymer is a random copolymer, the molding of the polyamide-based resin expanded beads can be performed under a relatively low forming pressure.

Non-limiting examples of propylene-based copolymers are copolymers of propylene and at least one of ethylene and/or of alpha-olefins with carbon numbers from 4 to 20. Non-limiting examples of ethylene-based copolymers are copolymers of ethylene and at least one of propylene and/or of alpha-olefins with carbon numbers from 4 to 20. Non-limiting examples of said α-olefins with carbon numbers from 4 to 20 are 1-butene, 1-pentene, 1-hexene, 1-octene and 4-methyl-1-butene. 1-butene, 1-pentene, 1-hexene, 1-octene, 4-methyl-1-butene.

The content of propylene monomer in a propylene-based copolymers is preferably 80 wt.-% or more, and more preferably 90 wt.-% or more. The content of propylene monomer in said polypropylene copolymers is preferably 99 wt.-% or less, and more preferably 98 wt.-% or less. The content of ethylene monomer in an ethylene-based copolymer is preferably 80 wt.-% or more, 90 wt.-% or more, more preferably 95 wt.-% or even more preferably 98 wt.-% or more.

Examples of said propylene-based copolymers can include impact-resistant polypropylene (block polypropylene), which is composed of two or more phases including a continuous phase of propylene polymer and a rubber phase such as, e.g. ethylene-α-olefin copolymer existing as a dispersed phase within the continuous phase, for instance.

When propylene-based random copolymers contain ethylene-derived components (ethylene component) and/or butene-derived components (butene component) as co-monomers, the moldability of the beads under low molding pressure conditions can be further improved.

If the polypropylene resin comprises ethylene and butene, the total amount of the ethylene and butene is particularly between 1 and 15 wt.-%, more particularly between 2 and 15 wt.-%, more particularly between 3 and 15 wt.-%. In such a manner, it is possible to obtain, by molding the beads in a mold, a part having good mechanical properties, such as, e.g. compressive strength, while having a good moldability of the beads under low molding pressure conditions. The respective amount of ethylene and further components in a respective propylene-based random copolymer can be determined by IR spectral measurements, for instance.

The polypropylene resin may be a linear polypropylene resin, a branched polypropylene resin, or a combination of both.

Non-limiting examples of polyethylene-resin can include polyethylene homopolymers and ethylene-based copolymers containing more than 50% by mass of ethylene monomer. Specifically, polyethylene-based resins include high-density polyethylene (HDPE), medium-density polyethylene (MDPE), low-density polyethylene (LDPE) and linear low-density polyethylene (LLDPE), linear ethylene copolymers such as, e.g. ethylene-vinyl acetate (EVA) copolymer and ethylene methyl acrylate (EMA) copolymer. Among these, LLDPE, which is a copolymer of ethylene and α-olefin exhibiting a linear shape, is particularly preferred. Examples of suitable LLDPE include ethylene-1-butene copolymer, ethylene-1-pentene copolymer, ethylene-1-hexene copolymer, ethylene-4-methyl-1-pentene copolymer, and ethylene-1-octene copolymer.

Non-limiting examples of a polyamide homopolymer include a poly(caprolactam) (nylon 6), a poly(dodecalactam) (nylon 12), a poly(hexamethylene adipamide) (nylon 66), a poly(7-aminoheptanoic acid) (nylon 7), a poly(8-aminooctanoic acid) (nylon 8), a poly(9-aminononanoic acid) (nylon 9), a poly(10-aminodecanoic acid) (nylon 10), a poly(11-aminoundecanoic acid) (nylon 11), a poly(hexamethylene sebacamide) (nylon 610), a poly(decamethylene sebacamide) (nylon 1010),a poly(hexamethylene azelamide) (nylon 69), a poly(tetramethylene adipamide) (nylon 46), a poly(tetramethylene sebacamide) (nylon 410), a poly(pentamethylene adipamide) (nylon 56) and a poly(pentamethylene sebacamide) (nylon 510).

Examples of a polyamide copolymer include a polycaproamide/polyhexamethylene adipamide copolymer (nylon 6/66), a caprolactam/hexamethylene diaminoadipic acid/lauryllactam copolymer (nylon 6/66/12), and a caprolactam/lauryllactam copolymer (nylon 6/12). Among the polyamide-based resins, a polyamide-based resin made of one or two or more in combination of selected from the group consisting of nylon 6, nylon 66, nylon 6/66 and nylon 6/66/12 is preferred, and nylon 6/66 or nylon 6/66/12 is particularly preferred.

The melt mass-flow rate, MFR, of a polypropylene-based resin measured at a temperature of 230°C and a load of 2.16 kg is particularly 3 g/10 min or more, more particularly 4 g/10 min or more. These values provide good expandability (foamability) of the beads during the further expansion and secondary expandability (foamability) of the beads during molding. On the other hand, the MFR of the polypropylene-based resin can be 15 g/10 min or less, and more particularly 10 g/10 min or less. These values can improve the uniformity of the beads and the physical properties of a part made therefrom by molding. In other words, the MFR of the polypropylene-based resin is preferably from 3 to 15 g/10 min, and more preferably from 4 to 10 g/10 min.

The melt mass-flow rate, MFR, of a polyethylene-based resin measured at a temperature of 190°C and a load of 2.16 kg is particularly 0.5 g/10 min or more, more particularly 0.8 g/10 min or more. These values provide good expandability and foamability, respectively of the beads during expansion in a further expansion process and during secondary expandability (foamability) of the beads during molding. On the other hand, the MFR of the polyethylene-based resin can be 4 g/10 min or less, and more particularly 3 g/10 min or less. These values can improve the uniformity of the beads and the physical properties of a part made therefrom by molding. In other words, the MFR of the polyethylene-based resin is preferably from 0.5 to 4 g/10 min, and more preferably from 0.8 to 3 g/10 min.

The MFR of the polypropylene- or polyethylene-based resin can be determined using respective resin beads as test specimens in accordance with ISO 1133-1. The MFR can be measured with a MFR-measurement device available from Dynisco, 38 Forge Parkway, Franklin MA 02038, USA, under the name "LMI4000", for instance.

The polyamide-based resin used to produce the beads can have a density of preferably 1.05 g/cm³ or more, and preferably 1.1 g/cm³ or more. The measurement of the density can be performed based on the method described in ISO 1183-3.

When the beads are made from a polypropylene-based resin, the melting point of the polypropylene-based resin is particularly 130°C or higher, more particularly 135°C or higher, more particularly 140°C. Respective melting points typically, enable obtaining, by molding the beads in a mold, a component having good mechanical properties such as, e.g. compressive strength. On the other hand, the melting point of the polypropylene resin is particularly 155°C or less, more particularly 150°C or less, and even more particularly 148°C or less to enable a molding process of the beads under low molding pressure conditions. In other words, the melting point of the polypropylene-based resin is preferably between 130°C to 155°C, more preferably between 135°C to 150°C and even more preferably between 140°C to 148°C.

When the beads are made from a polyethylene-based resin, the melting point of the polyethylene-based resin is particularly 110°C or higher. If the melting point of the polyethylene-based resin is higher than 110°C, the molded product will be less prone to shrinkage and present a good shape recovery after molding. From the viewpoint of further improving moldability, the melting point of the polyethylene-based resin is preferably 112°C or higher, more preferably 115°C or higher. If the melting point of the polyethylene-based resin is lower than 130°C, molding at a low molding temperature will be possible with good fusion adhesion and enhanced moldability. From the viewpoint of further improving moldability, the melting point of the polyethylene-based resin is preferably 128°C or lower, more preferably 125°C or lower. In other words, the melting point of the polyethylene-based resin is preferably between 110°C and 130°C, more preferably between 112°C and 128°C, and even more preferably between 115°C and 125°C.

When the beads are made from a polyamide-based resin, the melting point of the polyamide-based resin is particularly 185°C or higher. If the melting point of the polyamide-based resin is above 185°C, the molded product will present good properties of heat resistance. From the viewpoint of further improving the heat resistance, the melting point of the polyamide-based resin is preferably 188°C or higher, more preferably 190°C or more. If the melting point of the polyamide-based resin is lower than 280°C, it is easier to control the process temperature during a first expansion step (first pass). From the viewpoint of further improving the processing of the polyamide-based resin, the melting point of the polyamide-based resin is preferably 260°C or lower, more preferably 240°C or lower. In other words, the melting point of the polyamide-based resin is preferably between 185°C and 280°C, more preferably between 188°C and 260°C, and even more preferably between 190°C and 240°C.

The melting point of the any resin can be measured in accordance with JIS K 7121:2012 using a resin sample as test sample. The test sample is subjected to a nitrogen inflow rate of 30 mL/min. After heating from 23°C to 200°C at a heating rate of 10°C/min, the test sample is kept at that temperature for 10 min, cooled to 23°C at a cooling rate of 10°C/min and then heated again to 200°C at a heating rate of 10°C/min to obtain a, differential scanning calorimetry, DSC, curve (DSC curve for the second heating). The apex temperature of the melting peak in the DSC curve is then determined and this value is used as the melting point of the resin. If multiple melting peaks appear in the DSC curve, the apex temperature of the melting peak with the highest melting peak height with reference to the baseline is used as the melting point. Respective DSC-measurements can be carried out in accordance with Japanese standard JIS K 7122-2012.

The polymer material constituting the beads can contain other polymers other than the aforementioned polyolefin-based resin to the extent that it does not interfere with the purpose and effect of the present invention. Respective other polymer materials are preferably thermoplastic polymers, and more specifically, thermoplastic resins other than polyolefin-based resins, such as polystyrene-based resins, polyamide-based resins, polyester-based resins, polycarbonate-based resins, modified polyphenylene ether-based resins, and the like. Thermoplastic elastomers such as olefinic thermoplastic elastomers (TPO) and urethane thermoplastic elastomers (TPU) can also be included as other polymers mentioned above. A mixture of at least two of these examples of other polymer materials can also be conceived.

It is preferable that the content of other thermoplastic polymers other than said polyolefin-based resin in the polymer material constituting the beads is 20 wt.-% or less, with 10 wt.-% or less being more preferable, 5 wt.-% or less being even more preferable, and 0 wt.-% being particularly preferable. In other words, it is particularly preferred that the beads contain substantially only polyolefin resin as the thermoplastic polymer.

Thermoplastic polymers usually exhibit a flexural modulus of 100 MPa or higher. From the viewpoint of improving the moldability of the beads, the flexural modulus of the thermoplastic base polymer is preferably less than 3000 MPa, more preferably less than 2000 MPa, even more preferably less than 1500 MPa. The flexural modulus of thermoplastic polymers is determined based on JIS K7171:2008.

When the beads comprise a non-thermoplastic polymer, it is preferable that the content of the non-thermoplastic polymer is 20 wt.-% or less, with 10 wt.-% or less being more preferable, 5 wt.-% or less being even more preferable, and 0 wt.-% being particularly preferable. In other words, when other polymers other than polyolefins or polyamides are included in the beads, the other polymers are preferably thermoplastic polymers.

A bead can comprise several layers comprising a foam layer and at least one additional layer built or arranged on the foam layer. Such beads can be deemed or denoted multi-layered beads which comprise a foam layer as a core layer and at least one other layer coating or covering the core layer. The at least one other layer can also be a resin layer, particularly a polyolefin or a polyamide layer. It is also conceivable that the at least one other layer is produced by grafting chemicals such as styrene monomer on top of another layer such as the core layer, optionally later polymerizing the grafted chemicals to obtain multi-layered beads. At least one of the core layer and the at least one additional layer can comprise openings, e.g. through-holes, etc.

In respective multi-layered beads, the at least one additional layer can cover only a part or the entire (outer) surface of the foam layer. When the at least one other layer is a resin layer such as a polyolefin or a polyamide layer, the melting point of a respective resin component comprised in a respective additional layer is preferably lower than that of the resin component comprising the foam layer to improve the fusion ability of the beads during molding. It is also preferred that the coating layer is a substantially non-foam resin layer. In this case, it is possible to provide a molded component having a good mechanical strength.

In respective multi-layered beads, the ratio of the mass of the component comprising the foam layer to the mass of the components comprising the at least one additional layer should range between 99:1 to 70:30, preferably between 98:2 to 80:20, and more preferably between 97:3 to 85:15.

As indicated above, each bead comprises an outer shell or outer wall, respectively and a plurality of cells, particularly closed cells, within that outer shell or outer wall, respectively. As such, the cellular structure of a respective bead is based on a plurality of cells, particularly on a plurality of closed cells. Respective closed cells are typically, defined by outer and/or inner wall elements of a respective bead, wherein the respective outer and/or inner wall elements delimit an inner cell volume which does not communicate with inner cell volumes of other cells of the respective bead.

According to a further exemplary embodiment, the plurality of cells, which are particularly closed cells, can be filled with an inorganic gas or gas composition, particularly air. The gas or gas composition can be or comprise a blowing agent which enables further expansion of the beads in a respective further expansion process. The plurality of cells is particularly, not filled with an organic gas comprising pentane as pentane is a gas which has several drawbacks, e.g. as it is regularly referred to as non-sustainable, particularly because of its high Volatile Organic Compound (VOC) emissions and its high Global Warning Potential (GWP).

According to a further exemplary embodiment, the beads can have a closed cell ratio of at least 80%, particularly at least 83%, more particularly at least 85%, more particularly at least 87% more particularly at least 90%, more particularly at least 93%, more particularly at least 95%. When the closed cell ratio of the beads is lower than 80%, the recovery properties of parts made from the beads under compression can be worsened. In addition, the moldability of the beads can be worsened, and voids can be formed on the surface of a respective part made from the beads. The closed cell ratio typically, represents a proportion of the volume of the closed cells relative to the volume of the whole of the cells in the expanded beads and can be determined using an air comparison pycnometer in accordance with of ASTM D2856-70, for instance.

According to a further exemplary embodiment, the average particle size of the beads can be between 0.3 - 15 mm, more particularly between 0.5 - 10 mm and even more particularly between 1 - 8 mm, for instance. The average particle size of the beads is a value which can be determined by the following method: First, based on the volume-based particle size distribution of the beads, the particle size distribution based on the number of beads is obtained by assuming the shape of the beads as a sphere and converting it to a number-based particle size distribution. Then, by arithmetic averaging the particle diameters based on this particle size distribution, the arithmetic mean particle diameter based on the number of beads can be obtained. The above particle diameter means the diameter of a virtual sphere having the same volume as a respective bead. The particle size distribution of the beads on a volume basis can be measured using a particle size distribution measuring device (e.g. the Microtrac PartAn 3D available from Nikkiso Co. Ltd., Japan), for instance. The number of beads used for the measurement should be, for example, 2000 or more.

In addition, an average mass per one bead (obtained from the mass of 200 randomly selected beads) is preferably 0.1 to 20 mg, more preferably 0.2 to 10 mg, still more preferably 0.3 to 5 mg, and particularly preferably 0.4 to 2 mg.

According to a further exemplary embodiment, the beads can have one or more melting peaks (high temperature peaks) on the high temperature side of the resin-specific melting peak (resin-specific peak) of said beads in the DSC curve by differential scanning calorimetry, DSC, measured in accordance with JISK7122-2012. It is preferred to have one or more melting peaks (high temperature peaks) on the high temperature side of the resin-specific melting peaks (resin-specific peaks) of the beads. Particularly, these melting peaks can be obtained by the following method:
Specifically, a DSC curve is obtained by heating 1-5 mg of beads from 23°C to 200°C at a heating rate of 10°C/min by means of a differential scanning calorimeter. The peak with the highest melting calorific heat value is the melting peak specific to the main resin of the beads, or resin-specific peak, and the one or more melting peaks appearing at a higher temperature are the one or more high-temperature peaks. The DSC curve relates to the curve obtained by heating the beads by the above-mentioned measurement method (DSC curve in the first heating). The resin-specific peak means the endothermic peak resulting from the melting of the crystals specific to the main resin constituting the beads. In other words, the resin-specific peak is considered to be an endothermic peak that appears due to the endothermy caused by the melting of the crystals normally possessed by the resin that constitutes the beads.

To determine the peak corresponding to the resin-specific peak or the one or more high temperature peaks, it is possible to use the following method: after heating the beads from 23°C to 200°C at a heating rate of 10°C/min (first heating), the beads are further cooled from 200°C to 23°C at a cooling rate of 10°C/min and then heated again from 23°C to 200°C at a heating rate of 10°C/min (second heating). On the DSC curve obtained from the second heating only the endothermic peak due to the melting of crystals specific to the resin comprising the beads appears. Since this resin-specific peak appears in both the DSC curve at the first heating and the DSC curve at the second heating, and although the temperature of the peak apex may differ slightly between the first and second heating (but the difference is usually less than 5°C), the identification of which peak is the resin-specific peak is possible. On the other hand, the one or more endothermic peaks on the high temperature side of the resin-specific peak are the one or more endothermic peaks that appear on the high temperature side of the DSC curve of the first heating, above the resin-specific peak

The heat of melting of the one or more high temperature peaks of the beads is preferably 5 to 40 J/g, more preferably 6 to 30 J/g, more preferably in the range between 7-25 J/g. When the heat of melting of the one or more high temperature peaks of the beads is in the aforementioned range, it is possible to obtain a good component by molding with a wider processing window. The calorific heat of melting of the one or more high temperature peaks can be measured by the following method: on the DSC curve of the first heating, a straight line (α-β) is drawn connecting point α, corresponding to 80°C on the DSC curve, and point β on the DSC curve, corresponding to the melting end temperature T of the beads. The melting end temperature T is the end point of the high temperature side of the high temperature peak, or of the high temperature peak present at the highest temperature if more than one high temperature peaks are present, and is the intersection of the high temperature peak, or of the high temperature peak present at the highest temperature if more than one high temperature peak is present, and the baseline. Next, a straight line is drawn parallel to the vertical axis of the graph from point γ on the DSC curve, which corresponds to the point of lowest heat within the valley between the above resin-specific peak and the high temperature peak, or of the high temperature peak present at the lowest temperature if more than one high temperature peaks are present. The point of intersection with the above straight line (α-β) is δ. The calorific heat of melting of the one or more high temperature peaks, expressed in J/g, corresponds to the area of the one or more high-temperature peaks bounded by the curve of the one or more high-temperature peaks portion of the DSC curve, the line segment (δ-β), and the line segment (γ-δ), divided by the mass of beads used for the experiment.

As mentioned above, the beads typically, undergo an initial expansion process, sometimes also denoted "first pass". Particularly, a respective initial expansion process can comprise applying temperature and/or pressure to a solution, particularly an aqueous solution, comprising respective raw material beads for a specific time such that the beads expand to a certain degree, e.g. in an autoclave process or in an extrusion foaming process.

An example of an initial expansion process can be an autoclave process in which thermoplastic resin particles (hereinafter referred to as "resin particles") composed of a semi-crystalline thermoplastic resin as a base resin are dispersed in a dispersion medium, such as, e.g. water. After impregnating the resin particles with a foaming agent, such as, e.g. carbon dioxide, the resin particles containing the foaming agent can be discharged under a low pressure together with the dispersion medium.

Resin particles can be produced, for example, by a strand cut method, in which a semi-crystalline thermoplastic resin that serves as the base resin and additives such as, e.g. light absorbing additives and nucleating agents are supplied as necessary into an extruder, heated and kneaded to form a resin melt material. Thereafter, the resin melt material is extruded through a small hole of a die attached to the tip of the extruder to form a strand. After cooling, the extrudate is cut to a desired length to obtain the resin particles. The method for producing the resin particles is not limited to the method described above, and a hot cutting method, an underwater cutting method can also be employed, for example.

In the autoclave expansion process, the shape of the 1^{st} pass expanded beads has a shape which is the image of the shape of the resin particles. For instance, to obtain 1^{st} pass expanded beads having a high sphericity, cylindrical resin particles are typically used.

As mentioned above, the aforementioned resin particles are dispersed in a dispersion medium. The operation of dispersing the resin particles in the dispersion medium can be performed in a closed container. As the dispersion medium, an aqueous dispersion medium containing water as a main component can be used, for instance. In addition to water, the aqueous dispersion medium may contain hydrophilic organic solvents such as ethylene glycol, glycerin, methanol and ethanol. The proportion of water in the aqueous dispersion medium is preferably 60% by mass or more, more preferably 70% by mass or more, and even more preferably 80% by mass or more.

It is preferable to add a dispersant to the dispersion medium to suppress fusion between the resin particles heated in the container in the foaming step. The amount of the dispersant added is preferably 0.001 parts by mass or more and 5 parts by mass or less per 100 parts by mass of the resin particles. An organic dispersing agent or an inorganic dispersing agent can be used, but a fine particulate inorganic material is preferred as the dispersing agent for ease of handling. More specifically, the dispersant can include, for example, clay minerals such as kaolin, mica, and clay, aluminum oxide, titanium oxide, basic magnesium carbonate, basic zinc carbonate, calcium carbonate, iron oxide, etc. These dispersants may be used alone, or in combination. Among these, it is preferable to use a clay mineral as a dispersant.

When a dispersant is used, it is preferable to use an anionic surfactant such as sodium dodecylbenzenesulfonate, sodium alkylbenzenesulfonate, sodium laurylsulfate, and sodium oleate together as a dispersing aid. The amount of the dispersion aid added is preferably 0.001 parts by mass or more and 1 part by mass or less per 100 parts by mass of the resin particles.

After dispersing the resin particles in the dispersion medium, the resin particles are impregnated with a foaming agent. The foaming agent with which the resin particles are impregnated is preferably a physical foaming agent. Physical foaming agents include inorganic physical blowing agents such as carbon dioxide, air, nitrogen, helium and argon; aliphatic hydrocarbons such as propane, butane and hexane; cycloaliphatic hydrocarbons such as cyclopentane and cyclohexane; Halogenated hydrocarbons such as fluoromethane, trifluoromethane, 1,1-difluoromethane, 1-chloro-1,1-dichloroethane, 1,2,2,2-tetrafluoroethane, methyl chloride, ethyl chloride, methylene chloride, etc. These physical foaming agents may be used alone, or two or more physical foaming agents may be used in combination. Moreover, mixtures of at least one inorganic physical foaming agent and at least one organic physical foaming agent can be used. For safety and sustainability concerns, inorganic physical blowing agents are preferably used, with carbon dioxide being particularly preferred.

The amount of the foaming agent added to 100 parts by mass of the resin particles is preferably 0.1 parts by mass or more and 30 parts by mass or less, and more preferably 0.5 parts by mass or more and 15 parts by mass or less.

The impregnation with the foaming agent can be performed into a closed container, and the pressure inside the closed container can be increased to impregnate the resin particles in the dispersion medium with the foaming agent. The impregnation is preferably conducted under the influence of temperature, as impregnation of the foaming agent into the resin particles can be further promoted at elevated temperatures.

The pressure in the sealed container during foaming is preferably 0.5 MPa (G) or more in gauge pressure, and preferably 4.0 MPa (G) or less. Within the above range, the 1^{st} pass expanded beads can be produced safely without causing damage to the sealed container.

After completion of the impregnation step, the resulting beads are released into an environment having a lower pressure than during the pressurization step. As a result, the resin particles expand which generates an internal cell structure, thereby obtaining 1^{st} pass expanded beads

This degree of expansion of the as-generated beads after the 1^{st} pass process (or 1^{st} pass expanded beads) will be increased when the beads are processed in a 2^{nd} pass process as explained further below. The increase in the degree of expansion is related with a decrease in the respective density such that the beads have a lower density when they have undergone the 2^{nd} pass process compared to when they have (only) undergone the 1^{st} pass process. The expansion ratio (between 1st pass and 2^{nd} pass) indicates the expansion of the beads after the 2^{nd} pass relative to the expansion after the 1^{st} pass. The expansion ratio (between 1st pass and 2^{nd} pass) is a value obtained by dividing the bulk density [kg/m³] of the beads before they have been processed in the 2^{nd} pass process (typically the bulk density of the 1^{st} pass expanded beads) by the bulk density [kg/m³] of the beads (after the 2^{nd} pass process).

A second aspect of the invention relates to a method for producing pre-expanded polymer beads, comprising a cellular structure, wherein the pre-expanded beads have a spherical basic shape defined by a sphericity φ of more than 0.94 and less than 1 (or 1.0), and wherein the pre-expanded beads have an angle of repose between 31.0° and 50.0°, the angle of repose being measured in accordance with ISO 4324. The method comprises at least the following steps: providing, in a first step, raw material polymer beads, comprising a cellular structure, on a conveying structure, such as, e.g. a conveyor belt, the raw material polymer beads having a first angle of repose, wherein the raw material polymer beads comprise a polymer base material and at least one additive; and moving, in a second step, the conveying structure relative to at least one heating device, wherein the heating device applies via radiation in a specific wavelength range, such as, e.g. a wavelength range between 750 nm and 8 µm, particularly 1 µm - 4 µm, thermal energy to the raw material polymer beads, wherein the at least one additive exhibits a higher absorption for electromagnetic energy in the specific wavelength range than the polymer base material, thereby generating pre-expanded polymer beads, comprising a cellular structure, wherein the beads have a spherical basic shape defined by a sphericity φ of more than 0.94 and less than 1 (or 1.0), and wherein the pre-expanded beads have an angle of repose between 31.0° and 50.0°, the angle of repose being measured in accordance with ISO 4324. The second step typically, comprises an expansion of the raw material polymer beads to generate the beads having a spherical basic shape defined by a sphericity φ of more than 0.94 and less than 1.0, and wherein the pre-expanded beads have an angle of repose between 31.0° and 50.0°, the angle of repose being measured in accordance with ISO 4324.

Notably, the raw material polymer beads provided in the first step of the method have a higher density than the pre-expanded beads generated in the second step of the method. In other words, the method of the second aspect of the invention serves for producing beads of the first aspect of the invention.

The raw material polymer beads can comprise expanded beads (directly) resulting from a 1^{st} pass process as specified further above. When the raw material polymer beads comprise expanded beads, the density of the raw material polymer beads can preferably range in between 30 kg/m³ or higher and 120 kg/m³ or lower.

Particularly, the raw material polymer beads can comprise at least one light absorbing additive which can be present in a range between a lower limit which can be at least one of: 0.1 wt.-%, 0.2 wt.-%, 0.3 wt.-%, 0.4 wt.-%, 0.5 wt.-%, 0.6 wt.-%, 0.7 wt.-%, 0.8 wt.-%, 0.9 wt.-%, 1.0 wt.-%, 1.5 wt.-%, 2.0 wt.-%, 2.5 wt.-%, 3.0 wt.-%, 3.5 wt.-%, 4.0 wt.-%, 4.5 wt.-%, 5.0 wt.-%, for instance and an upper limit which can be at least one of: 20.0 wt.-%, 15 wt.-%, 10.0 wt.-%, 9.5 wt.-%, 9.0 wt.-%, 8.5 wt.-%, 8.0 wt.-%, 7.5 wt.-%, 7.0 wt.-%, 6.5 wt.-%, or 6.0 wt.-%, for instance. As such, the at least one light absorbing additive can be present in an amount ranging between 0.1 wt.-% and 10.0 wt.-%, for instance.

The at least one light absorbing additive can be or comprise one or more organic and/or inorganic pigments (dyes) or one or more combinations of organic and/or inorganic pigments (dyes) differing in at least one chemical and/or physical parameter, for instance. As such, the at least one light absorbing additive can generally be or comprise pigments which are configured to absorb light of the specific wavelength range, which is, as is apparent from above, typically, a wavelength range comprising wavelengths between 750 nm and 8 µm, particularly 1 µm - 4 µm.

Inorganic pigments can include, for example, chromates such as lead chromate (yellow), zinc chromate (yellow), and barium chromate (yellow), ferrocyanides such as Prussian blue (dark blue), sulfides such as cadmium sulfide (yellow) and cadmium selenide (red), oxides such as iron oxide (red, yellow, brown), titanium dioxide (white) and silicates such as ultramarine blue. Organic pigments can include, for example, azo pigments, such as mono-azo pigments, di-azo pigments, azo lakes, and condensed azo pigments, polycyclic pigments such as phthalocyanines (blue and green), anthraquinones (red), perylenes (red), perinones (orange), thioindigo (violet), quinacridone (red), dioxazine (violet), isoindolinones (yellow), and quinophthalones (yellow).

According to a further exemplary embodiment, the at least one light absorbing additive can be or comprise a black inorganic pigment comprising carbon particles. Black inorganic pigment can include, for example, one or more materials selected from carbon black, conductive carbon, graphene, graphite, carbon nano-structures, such as e.g. tubes, layers, etc.

According to a concrete exemplary embodiment, the at least one light absorbing additive is or comprises carbon black. Non-limiting examples of carbon black include channel black, roller black, furnace black, thermal black, acetylene black, and Ketjen black.

Other exemplary light absorbing additives which are not pigments can be conceived as well, such as dedicated near-infrared absorbers, for instance. Non-limiting examples of near-infrared absorbers include metal oxides and sulfides such as tungsten oxides, tin oxides, antimony oxides, lead sulfide, or mixture and/or compounds thereof.

Moving the raw material polymer beads in the second step of the method can be effected by (actively) moving the conveying structure relative to the heating device which is stationary, or by (actively) moving the heating device relative to the conveying structure which is stationary, or by (actively) moving the conveying structure and (actively) moving the heating relative to each other. In either case, one or more drive devices, such as, e.g. drive motors, can be assigned to the conveying structure and/or the heating device.

The heating device can comprise one or more heating elements, wherein each heating element can be configured to emit light of a specific wavelength or wavelength range, respectively.

Concrete examples of respective heating elements are infrared-emitting elements configured to emit light of a wavelength in the range between 750 nm and 8 µm, particularly 1 µm - 4µm.

Notably, the conveying structure can comprise a support surface for supporting the raw material polymer beads. The support surface can be provided with a three-dimensional structuring, e.g. comprising elevations and/or depressions, which comprises receptacles shaped and sized for receiving one or more raw material polymer beads.

When raw material polymer beads are being irradiated with thermal radiation in a specific wavelength range, wherein said raw material polymer beads comprise at least one additive exhibiting a higher absorption for electromagnetic energy in the specific wavelength range than the polymer base material, and when the raw material polymer beads are being placed on and supported by, respectively a (substantially) planar structure, such as, e.g. a conveying structure, it is believed that the heat transfer by heat radiation is modified compared to a conventional process in which the raw material polymer comprises no or not enough additive exhibiting a higher absorption for electromagnetic energy in the specific wavelength range than the polymer base material. It is believed that at least a part of the radiation is absorbed by said additive, preventing the radiation from crossing the substantially translucent polymer or at least reducing the radiation level crossing said substantially translucent polymer. Since the raw material polymer beads are being supported by a (substantially) plane surface, the heat transfer occurs in a non-isotropic way, leading to the creation of one or more planar wall portions on the produced beads at the contact surface in between the supporting surface and the raw material polymer beads, where the level of the radiation is the lowest.

According to an exemplary embodiment of the method, the ratio between the angle of repose of the pre-expanded polymer beads and the first angle of repose of the raw material polymer can range between 1.15 and 2.00 or less. Particularly, the aforementioned ratio between the angle of repose of the pre-expanded polymer beads and the first angle of repose of the raw material polymer can range in between 1.18 and 1.80, more particularly in between 1.20 and 1.60. As such, the method can result in an increase of the angle of repose of the beads of at least 15%, particularly at least 18%, particularly at least 20% which is believed to result from the expansion of the raw material polymer beads as they are irradiated with thermal radiation while being placed on and supported by the support surface.

According to a further exemplary embodiment of the method, the at least one heating device can comprise a radiation heating device, particularly comprising a plurality of radiation elements, such as, e.g. infrared emitters, configured to irradiate the beads with thermal radiation of a specific wavelength or a specific wavelength range. The at least one heating device can thus, be or comprise an infrared oven which can include one or more infrared emitters arranged, or formed, along a corresponding conveyor line. Respective infrared emitters can, for example, have an, optionally variable, radiation output in a range between 0.1 and 500 kW, further, more particularly, in a range between 0.5 and 250 kW, further, more particularly, in a range between 0.5 and 50 kW further, more particularly, in a range between 1 and 10 kW. Any and all intermediate values not explicitly listed here are also conceivable. Different temperature zones can be created using variable radiators or variable radiator (area) outputs, which also provides a parameter for influencing the expansion process.

The method can be embodied in accordance with the principles disclosed in WO 2022/229286 A1, the contents of which are incorporated herein by reference. As such, the method can comprise providing a raw material comprising pre-expanded beads having a cellular structure; loading the beads with a blowing agent under the influence of at least pressure, and expanding the beads loaded with the blowing agent under the influence of temperature, wherein the expanding of the beads loaded with the blowing agent is carried out under the influence of temperature by irradiating the beads loaded with the blowing agent with high-energy thermal radiation, more particularly, infrared radiation. Gases such as, for example, carbon dioxide or a mixture containing carbon dioxide and/or nitrogen, such as, for example, air can be used as a blowing agent.

According to a further exemplary embodiment of the method, the conveying structure can be a conveyor belt having a moving speed. Particularly, the moving speed of the conveyer belt can be selected based on e.g. the length along which the raw material polymer beads are irradiated, e.g. the length of the at least one heating device, to define the appropriate time of exposure of the raw material polymer beads to the radiation, considering the radiation output of the one or more infrared emitters, and the desired properties of the resulting beads. In other words, it is possible to adjust the energy provided to the raw material polymer beads by adjusting the moving speed of the conveyer belt, and hence the time of exposure of the raw material polymer beads to the radiation, or by adjusting the radiation output of the one or more infrared emitters. The energy provided to the raw material polymer beads (kJ) is defined as the mathematical product of the time of exposure of the raw material polymer beads to the radiation (s) by the total radiation output of the one or more infrared emitters (kW) irradiating the raw material polymer beads during the moving step.

To produce beads having an angle of repose of 31.0° or more while having a short pressurization step of the beads loaded with the blowing agent, the energy provided to the raw material polymer beads can preferably be of 10 kJ or more, more particularly of 15 kJ or more, more particularly of 17 kJ or more, more particularly of 20 kJ or more. To produce beads having a high sphericity, the energy provided to the raw material polymer beads (kJ) can preferably be of 50 kJ or lower, more particularly of 45 kJ or lower, more particularly of 40 kJ or lower, more particularly of 35 kJ or lower. Particularly, the energy provided to the raw material polymer beads can range in between 10 kJ and 50 kJ, more particularly in between 12 and 45 kJ, more particularly in between 15 and 40 kJ, more particularly in between 20 and 35 kJ, for instance.

According to a further exemplary embodiment of the method, the expansion ratio between the density of the raw material polymer beads and the density of the pre-expanded polymer beads between 1.5 and 5.0. When the expansion ratio in between the density of the raw material polymer beads and the density of the pre-expanded polymer beads is higher than 1.5, particularly higher than 1.8, more particularly higher than 2.0, even more particularly higher than 2.5, it is easier to obtain beads having a angle of repose of 31.0° or more. When the expansion ratio in between the density of the raw material polymer beads and the density of the pre-expanded polymer beads is lower than 5.0, particularly lower than 4.5, more particularly lower than 4.0, it is easier to obtain pre-expanded polymer beads have a very good spherical shape with a sphericity of 0.94 of above.

A third aspect of the invention relates to a particulate polymer material composition, comprising pre-expanded polymer beads according to the first aspect of the invention. Hence, the beads can form part of a composite material which extends the application spectrum of the beads.

A fourth aspect of the invention relates to a method of processing, e.g. by molding, beads according to the first aspect of the invention to produce a molded part, the method comprising: supplying respective beads into a mold cavity of a molding tool, performing at least one molding step in which the beads are molded, thereby producing a molded part. The at least one molding step can comprise the injection of thermal energy, e.g. via steam, into the mold cavity which results that the beads combine to form a molded part.

The method of processing, e.g. by molding, beads according to the first aspect of the invention to produce a molded part can be performed by filling the beads into a molding mold and heating and molding the beads. Specifically, after the beads are filled into the molding mold, the beads are heated to cause secondary foaming and fuse with each other to obtain the component which has the (negative) shape of the molding space. Examples of methods for heating the beads include introducing a heating medium such as steam into the molding mold and heating the beads by the heating medium, irradiating the beads with electromagnetic waves such as radiofrequency waves, bonding the beads by introduction of specific chemicals (ATECARMA), welding of the beads inside the molding tool by conductive heating of the molding tool without introduction of steam inside the cavity and a method combining such methods.

For filling the beads into the molding mold, known methods can be employed. For example, the beads can be compressed with a pressurized gas directly into a pressurized mold and then the pressure in the mold can be released (pressure filling method), or the beads can be mechanically compressed by previously opening the mold to expand the molding space before filling the beads into the mold and closing the mold after filling (cracking filling method). Before filling, the beads can optionally be pressurized with a gas such as e.g. air, to give a predetermined internal pressure to the cells of the beads and thus provide a certain further expansion ability to the beads.

A fifth aspect of the invention relates to a molded part made from beads according to the first aspect of the invention. The part can be a technical component or form part of a technical component, for instance. The part can be a vehicle component, i.e. a component which is to be arranged in a vehicle, such as particularly a component for a car, an aircraft, a watercraft, etc., for instance. More concrete, yet non-limiting examples of respective components molded from respective beads which are casing elements, housing elements and protection elements e.g. for battery devices, electric devices, electronic devices, etc.

All annotations concerning the beads according to the first aspect of the invention also apply to the method according to the second aspect of the invention and vice versa, and/or to the particulate polymer material composition according to the third aspect of the invention and vice versa, and/or to the method according to the fourth aspect of the invention and vice versa, and/or to the molded part according to the fifth aspect of the invention and vice versa.

Below reproduced Table 1 and Table 2 show seven examples and eleven comparative examples of beads in accordance with the first aspect of the invention in the lines indicated by "2^{nd} pass expanded beads". As is apparent from Table 1, the beads of all examples comprise a sphericity of at least 0.94 and an angle of repose measured in accordance with ISO 4324 of above 31.0°, particularly above 31.5° (or more).

The angle of repose has been measured with an apparatus (article no. L50566070) for measuring the angle of repose according to ISO 4324 which is available from Landgraf Laborsysteme HLL GmbH, Magdeburger Straße 3, 30855 Langenhagen, Germany, and has the article no. L50566070 (see URL: https://www.hallflowmeter.de/12/158/AD223/TDUwNTY2MDcw/223-L50566070-landgraf-hll.html?sid=c69jj62j69pkptk4asdegi3s37). To prevent the undesired effects of static electricity on the measurement, the apparatus was grounded and an ionizing gun was used to remove the excess static electricity remaining on the surface of the beads, if any. The ionizing gun is available under the reference 8193 Gen4^{®} Ion Air Gun from the company EXAIR LLC (11510 Goldcoast Drive, Cincinnati, Ohio 45249-1621, USA), for instance.

The sphericity of the beads has been measured with an apparatus for measuring the particle size distribution which is available under the reference Microtrac PartAn 3D from Nikkiso Co. Ltd., Japan). The number of beads used for the measurement was of 2000 or more.

The lines in the respective tables indicated with "1^{st} pass expanded beads" indicate base parameters of the respective raw material polymer beads. As indicated above, the 1^{st} pass comprises an initial expansion process in which raw material beads, particularly compact raw material beads, have been initially expanded under influence of temperature and/or pressure.

### (Example 1)

An extruder with an inner diameter of 50 mm, equipped with a circular die for forming strands on the outlet side, was prepared. A first copolymer polypropylene resin, an ethylene-propylene copolymer having a melting point of 143°C, an ethylene content of 2.1 wt.-%, a MFR of 6 g/10 min (measured at a load of 2.16 kg, at 230°C in accordance with ISO 1133-1), 0.05 wt.-% of zinc borate and carbon black (referred to as "CB" in the Tables) in the proportions of the formulations in Table 1 were fed to the extruder and melted and kneaded to form a resin melt. The resulting resin melt was extruded as strands from a strand-forming die, the extruded strands were cooled in water and cut with a pelletizer to obtain resin particles (with an average mass of 1 mg per particle).

In a 100 L sealed vessel, 8 kg of the aforementioned resin particles, 69 L of water as liquid dispersing agent, 77 g of kaolin and 39 g of sodium dodecylbenzenesulphonate were prepared.

Next, carbon dioxide was pressurized as a foaming agent into the sealed container until a gauge pressure of 0.5 MPa (G) was achieved. Next, the content of the sealed vessel was heated up to a foaming temperature of 153°C. Next, carbon dioxide was pressurized into the sealed container to a pressure (foaming pressure) of 2.0 MPa (G), and then further held at the same temperature and pressure for 15 minutes.

The content of the closed container was then released under atmospheric pressure to foam the resin particles, thereby obtaining expanded resin particles. The density of the as-generated beads after the 1^{st} pass process and the angle of repose accordance with ISO 4324 were measured. The results of the measurements are indicated in Table 1.

The as-generated beads after the 1^{st} pass process (or 1^{st} pass expanded beads) were allowed to stand for 24 hours in an environment of an air temperature of 23°C, a relative humidity of 50%, and 1 atm for aging. Then, a pressurizable sealed vessel was filled with the 1^{st} pass expanded beads after aging, and the pressure in the sealed vessel was increased to pressurize the 1^{st} pass expanded beads. This pressurizing step was carried out for a predetermined time of at least 1 hour at a predetermined pressure of at least 0.1 MPa (G), and the inside of cells of the expanded beads was impregnated with air. Thereafter, the 1^{st} pass expanded beads were taken out from the sealed vessel to obtain 1^{st} pass expanded beads in which the internal pressure of the cells (ICP) of the 1^{st} pass expanded beads was the one indicated in Table 1.

Thereafter, the 1^{st} pass expanded beads were placed on a conveying belt conveying the 1^{st} pass expanded beads loaded with pressurized air through an infrared continuous oven including several infrared emitters (referred to as "IR" process in Table 1 and 2), typically at an output of 30 kg/h, thereby generating the pre-expanded polymer beads. The total radiator output of the infrared emitters and the exposure time (to the infrared radiation) of the 1^{st} pass expanded beads loaded with pressurized air (corresponding to the length along which the 1^{st} pass expanded beads are irradiated divided by the speed of the conveying belt) during the heating process, as well as the energy provided to the 1^{st} pass expanded beads (defined as the product of the time of exposure (to the radiation) of the 1^{st} pass expanded beads (s) by the total radiator output of the infrared emitters (kW)) were the one indicated in Table 1. The measurement results of the properties of the obtained pre-expanded beads are shown in Table 1.

To be noted that a substantially planar wall portion was observed on the basic shape of the beads. One of the pre-expanded polymer beads that was obtained was cut in half with a razor blade in a cutting plane which is perpendicular to the substantially planar wall portion and oriented along the length extension of the substantially planar wall portion. The obtained half bead was observed under a microscope VHX-6000 which is available from the company Keyence Corporation (1-3-14 Higashinakajima Higashiyodogawa-Ku. 533-8555, Osaka, Japan). The angle α in between the substantially planar wall portion and the two lateral wall portions in between which the substantially planar wall portion extends was measured at 124°. The length extension of the substantially planar wall portion was measured at 2117 µm, which corresponded to 47% of the length of the parallel diameter of the bead corresponding to the line passing through the center of the cross-section that bisects the half bead and is drawn parallel to the substantially planar wall portion.

Then, the beads were subjected to molding. As a mold, a split mold for flat plate molding having a molding space of 400 mm long x 300 mm wide x 30 mm thick was prepared. The molding space was filled with the beads with compressed air directly into the molding space and the mold was clamped. Next, steam was supplied into the mold to heat the beads to form a plate-shaped molded product.

Heating with steam was performed as follows: first, steam was supplied into the mold with the drain valves of both mold sides open (exhaust step). Next, with the drain valve of the other mold side open, steam was supplied into the mold from one mold side to heat the beads (one-sided heating step). Next, steam was supplied from the other mold side with the drain valve of one mold side open (reverse one-sided heating step). Subsequently, with the drain valves of both mold sides closed, steam was supplied from both sides until the inside of the mold reached a molding steam pressure of 0.32 MPa (G) (double-sided heating step). After the double-sided heating step is completed, the pressure inside the mold is released, and the mold is cooled with water until reaching a pressure (surface pressure) of 0.05 MPa (G) generated on the molding surface of the mold caused by the pressure of the expansion of the beads during the molding process.

Thereafter, the mold was opened and the expanded particle molded product was taken out from the mold. The molded product taken out from the mold was cured in an oven at 80° C for 12 hours, and then slowly cooled to room temperature. The cycle time (in seconds) corresponding to the total molding time of the beads within the mold the compression ratio corresponding to the ratio in between the density of the molded product and the density of the beads used to produce said product were reported in Table 1.

### (Examples 2-6)

The pre-expanded polymer beads were obtained in the same manner as in Example 1, except that the amounts of components, the density of the 1^{st} pass expanded beads and the process parameters of the IR process were changed. The amount of each component and the associated process conditions are shown in Table 1.

### (Example 7)

The pre-expanded polymer beads were obtained in the same manner as in Examples 1-6, except that another light absorbing additive than carbon black was used. The amount of each component and the associated process conditions are shown in Table 1.

### (Comparative examples C1-C6)

The 1^{st} pass expanded beads were obtained in a similar manner than in respective Examples 1 to 7, but after pressurization of the 1^{st} pass expanded beads in the pressurizable sealed vessel, the 1^{st} pass expanded beads were supplied to a steam pre-expander in which the pressurized 1^{st} pass expanded beads were heated with superheated steam (referred to as "steam" process in Table 2).

### (Comparative example C7)

The pre-expanded polymer beads were obtained in the same manner as in Example 7, except that the process parameters of the IR process were changed. The associated process conditions are shown in Table 1. The surface aspect of the product molded from the beads of Comparative example C7 was visually evaluated with an arbitrary scale of A to D (with A indicating an excellent color homogeneity and an excellent surface aspect, and D indicating a poor color homogeneity and a poor surface aspect). Comparative example C7 was rated D, while the Example 7 was rated B.

### (Comparative example C8)

The pre-expanded polymer beads were obtained in the same manner as in Example 1-6, except that a lower thermal energy was used to perform the 2^{nd} pass expansion of the 1^{st} pass expanded beads during the IR process.

### (Comparative example C9)

The pre-expanded polymer beads were obtained in the same manner as in Comparative example C8, except that the steam process of Comparative examples C1-C6 was used to produce the beads.

### (Comparative examples C10-C11)

The 1^{st} pass expanded beads were obtained in a similar manner than all previous examples except that no light absorbing additives were used.

Particularly, a comparison of the parameters provided in between Table 1 and Table 2 show that the processing of beads in accordance with the present invention enable a significant reduction of their molding cycle time.

**Table 1**

| | Example n° | 1 | 2 | 3 | 4 | 5 | 6 | 7 |
|---|---|---|---|---|---|---|---|---|
| Resin particles | Polymer | PP | PP | PP | PP | PP | PP | PP |
| | Light absorbing additive | CB | CB | CB | CB | CB | CB | Quinacridone (red) |
| | Light absorbing additive content (wt.-%) | 2,4 | 2,8 | 2,0 | 2,4 | 0,2 | 2,8 | 1,5 |
| 1st pass expanded beads | High-temperature peak (J/g) | 16 | 15 | 16 | 16 | 17 | 16 | 17 |
| | Density (kg/m³) | 53 | 53 | 53 | 53 | 53 | 75 | 32 |
| | First angle of repose (°) | 26,5 | 26,2 | 26,8 | 26,5 | 27,4 | 25,8 | 29,5 |
| 2nd pass expanded beads | Process | IR | IR | IR | IR | IR | IR | IR |
| | ICP (bar) | 5,6 | 4,6 | 5,1 | 4,3 | 5,0 | 7,2 | 4,0 |
| | IR radiator output (kW) | 5,2 | 5,2 | 5,2 | 5.2 | 5,2 | 5,2 | 5,2 |
| | Exposure time to the IR emitters (s) | 4,9 | 3,6 | 3,6 | 6,0 | 4,6 | 5,6 | 4,0 |
| | Energy provided to the 1^{st} pass expanded beads (kJ) | 25 | 19 | 19 | 31 | 24 | 29 | 21 |
| | Density (kg/m³) | 14 | 23 | 23 | 22 | 26 | 28 | 16 |
| | Expansion ratio (1^{st} pass to 2^{nd} pass) | 3,8 | 2,3 | 2,3 | 2,4 | 2,0 | 2,7 | 2,0 |
| | Angle of repose (°) | 38,3 | 31,9 | 31,6 | 32,5 | 32,3 | 33,1 | 33,0 |
| | Sphericity | 0,96 | 0,96 | 0,96 | 0,96 | 0,96 | 0,96 | 0,95 |
| | Angle of repose / First angle of repose | 1,45 | 1,22 | 1,18 | 1,23 | 1,18 | 1,28 | 1,12 |
| Molded part | Filling pressure (MPa (G)) | 0,18 | 0,21 | 0,21 | 0,21 | 0,21 | 0,21 | 0,18 |
| | Cycle time (s) | 233 | 215 | 216 | 193 | 207 | 154 | 217 |
| | Compression ratio | 1,99 | 1,87 | 1,95 | 2,00 | 1,84 | 1,80 | 2,00 |

**Table 2**

| | Example n° | C1 | C2 | C3 | C4 | C5 | C6 | C7 | C8 | C9 | C10 | C11 |
|---|---|---|---|---|---|---|---|---|---|---|---|---|
| Resin particles | Polymer | PP | PP | PP | PP | PP | PP | PP | PP | PP | PP | PP |
| | Light absorbing additives | CB | CB | CB | CB | CB | CB | Quinacri done (red) | CB | CB | - | - |
| | Light absorbing additive content (wt.-%) | 2,4 | 2,8 | 2,0 | 2,4 | 0,2 | 2,8 | 1,5 | 2,4 | 2,4 | 0 | 0 |
| 1st pass expanded beads | High-temperature peak (J/g) | 16 | 15 | 16 | 16 | 17 | 16 | 17 | 16 | 16 | 17 | 17 |
| | Density (kg/m³) | 53 | 53 | 53 | 53 | 53 | 75 | 32 | 53 | 53 | 53 | 53 |
| | First angle of repose (°) | 26,5 | 26,2 | 26,8 | 26,5 | 27,4 | 25,8 | 29,5 | 26,5 | 26,5 | 28,0 | 28,0 |
| 2nd pass expanded beads | Process | steam | steam | steam | steam | steam | steam | IR | IR | steam | IR | steam |
| | ICP (bar) | 5,6 | 4,6 | 5,1 | 4,3 | 5,0 | 7,2 | 2,0 | 5,6 | 5,6 | 5,4 | 5,4 |
| | IR radiator output(kW) | | | | | | | 5,6 | 5,2 | | 5,2 | |
| | Exposure time to the IR emitters (s) | | | | | | | 7,1 | 3,1 | | 6,4 | |
| | Energy provided to the 1^{st} pass expanded beads (kJ) | | | | | | | 40 | 16 | | 30 | |
| | Density (kg/m³) | 14 | 24 | 24 | 22 | 26 | 27 | 18 | 36 | 37 | 28 | 26 |
| | Expansion ratio (1^{st} pass / 2^{nd} pass) | 3,8 | 2,2 | 2,2 | 2,4 | 2,0 | 2,8 | 1,8 | 1,4 | 1,4 | 1,9 | 2,0 |
| | Angle of repose (°) | 29,8 | 29,4 | 29,5 | 29,2 | 28,1 | 29,2 | 34,5 | 29,3 | 29,1 | 28,2 | 28,1 |
| | Sphericity | 0,98 | 0,98 | 0,98 | 0,96 | 0.98 | 0,96 | 0,92 | 0,97 | 0,97 | 0,97 | 0,98 |
| | Angle of repose / First angle of repose | 1,12 | 1,12 | 1,10 | 1,10 | 1,03 | 1,13 | 1,17 | 1,11 | 1,10 | 1,01 | 1,00 |
| Molded part | Filling pressure (MPa (G) | 0,18 | 0,21 | 0,21 | 0,21 | 0,21 | 0,21 | 0,18 | 0,25 | 0,28 | 0,21 | 0,21 |
| | Cycle time (s) | 257 | 227 | 229 | 211 | 227 | 175 | 210 | 182 | 176 | 202 | 200 |
| | Compression ratio | 2,06 | 1,89 | 1,94 | 2,04 | 1,90 | 1,82 | 1,99 | 1,69 | 1,69 | 1,81 | 1,82 |

Exemplary aspects of the invention will be apparent from the exemplary embodiments which will be described below in connection with the Fig, where:
Fig. 1 and 2 each shows a principle drawing of a bead in accordance with an exemplary embodiment;
Fig. 3 shows a diagram illustrating a typical DSC curve for the measurement of the area of a high-temperature peak in accordance with an exemplary embodiment.

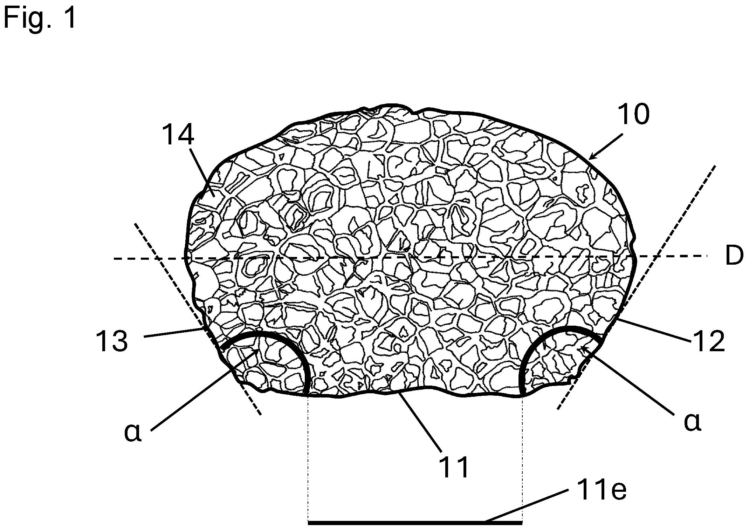

Fig. 1 shows a principle drawing of a bead 10 in accordance with an exemplary embodiment in a cross-sectionally cut view.

The bead 10 shown in Fig. 1 is a pre-expanded polymer bead, comprising a cellular structure made from a polyolefin base resin, e.g. a polypropylene base resin, or from a polyamide base resin.

The bead 10 has a density of 12 - 40 kg/m³, for instance.

The bead 10 comprises a polymer base material (polymer base resin) and at least one additive, wherein the at least one additive exhibits a higher absorption for electromagnetic energy in the infrared wavelength regime, particularly in a wavelength range comprising wavelengths between 750 nm and 8 µm, particularly 1 µm - 4 µm, than the polymer base material. The at least one additive can be a pigment, such as, e.g. carbon black, and can be present in an amount of 0.1 - 10 wt.-%, for instance.

As is apparent from Fig. 1, the spherical basic shape of the bead 10 comprises at least one substantially planar wall portion 11, wherein the at least one substantially planar wall portion extends between two lateral wall portions 12, 13. As is further apparent from Fig. 1, the angle α between the at least one substantially planar wall portion 11 and the two lateral wall portions 12, 13 can be an angle ranging between 90° and 160°. The at least one substantially planar wall portion 11 of a respective bead 10 can have a length extension 11e which can correspond to between 40 and 60%, of the length of the parallel diameter D of the bead 10 corresponding to the line passing through the center of the cross-section that bisects the bead 10 and is drawn parallel to the at least one substantially planar wall portion 11.

As is further apparent from Fig. 1, the cellular structure of the bead 10 comprises a plurality of cells 14, particularly closed cells, wherein the plurality of cells 14 is filled with an inorganic gas or an inorganic gas composition, particularly air. Notably, the plurality of cells 14 can comprise at least 80% closed cells.

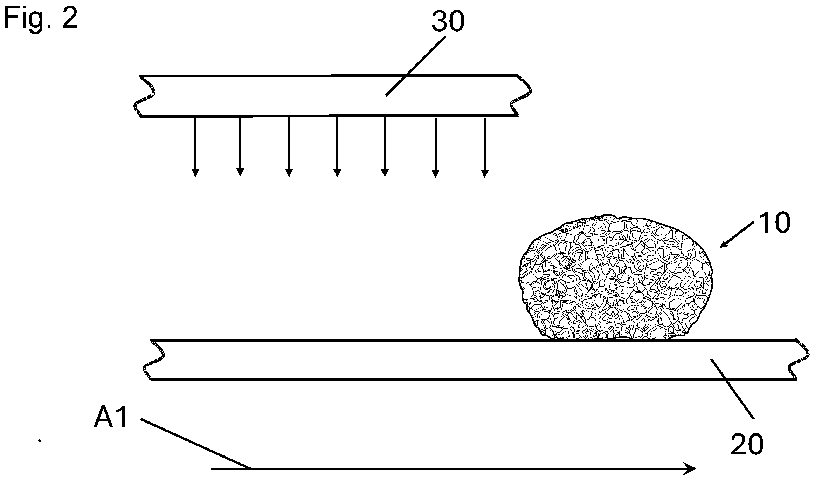

Fig. 2 shows a principle and thus, not to scale drawing of a bead 10 in accordance with an exemplary embodiment which illustrates an exemplary embodiment of a method for producing pre-expanded polymer beads, comprising a cellular structure, wherein the beads 10 have a spherical basic shape defined by a sphericity φ of more than 0.94 and less than 1.0, and wherein the beads have an angle of repose between 31.0° and 50.0°, the angle of repose being measured in accordance with ISO 4324.

The method comprises at least the following steps: (1) providing a raw material polymer beads, comprising a cellular structure, on a conveying structure 20, such as e.g. a conveying belt, and (2) moving, as indicated by the arrow A1, the conveying structure 20 relative to at least one heating device 30, such as e.g. an infrared radiation device, wherein the heating device 30 applies, particularly via radiation, thermal energy to the beads, thereby generating pre-expanded polymer beads 10, comprising a cellular structure, wherein the beads 10 have a spherical basic shape defined by a sphericity φ of more than 0.94 and less than 1, and wherein the beads have an angle of repose between 31.0° and 50.0°, the angle of repose being measured in accordance with ISO 4324.

Notably, Fig. 2 shows a bead 10 at the end of the conveying structure 20, i.e. in state when it has (essentially) undergone pre-expansion effect via thermal irradiation in the so-called second pass. Hence, Fig. 2 shows a bead 10 which has been produced in accordance with the method specified above.

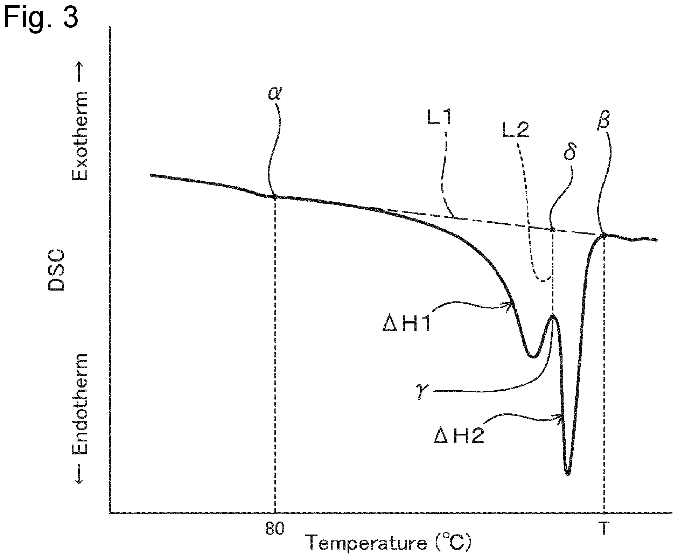

Fig. 3 shows a diagram illustrating a typical DSC curve for the measurement of the area of a high-temperature peak in accordance with an exemplary embodiment for beads based on a polypropylene resin.

## Claims

1. Pre-expanded polymer beads, comprising a cellular structure, wherein the beads have a spherical basic shape defined by a sphericity φ of more than 0.94 and less than 1, and wherein the beads have an angle of repose between 31.0° and 50.0°, the angle of repose being measured in accordance with ISO 4324.

2. Pre-expanded polymer beads of claim 1, wherein the beads have a density of 12 - 40 kg/m³.

3. Pre-expanded polymer beads of any one of the preceding claims, wherein the beads comprise a polymer base material and at least one additive, wherein the at least one additive exhibits a higher absorption for electromagnetic energy in the infrared wavelength regime, particularly in a wavelength range comprising wavelengths between 750 nm and 8 µm, than the polymer base material.

4. Pre-expanded polymer beads of claim 3, wherein the at least one additive is present in an amount of 0.1 - 10 wt.-%.

5. Pre-expanded polymer beads of claim 3 or 4, wherein the at least one additive comprises one or more organic and/or inorganic pigments or one or more combinations of organic and/or inorganic pigments differing in at least one chemical and/or physical parameter.

6. Pre-expanded polymer beads of claim 5, wherein the at least one additive is or comprises carbon black.

7. Pre-expanded polymer beads of any one of the preceding claims, wherein the spherical basic shape comprises at least one substantially planar wall portion, wherein the at least one substantially planar wall portion extends between two lateral wall portions.

8. Pre-expanded polymer beads of any one of the preceding claims, wherein the beads are made from a polyolefin-based resin, or wherein the beads are made from a polyamide-based resin.

9. Pre-expanded polymer beads of any one of the preceding claims, wherein the cellular structure of a bead comprises a plurality of cells, particularly closed cells, wherein the plurality of cells is filled with an inorganic gas or gas composition, particularly air.

10. Pre-expanded polymer beads of claim 9, wherein the plurality of cells comprise at least 80% closed cells.

11. A method for producing pre-expanded polymer beads, comprising a cellular structure, wherein the pre-expanded polymer beads have a spherical basic shape defined by a sphericity φ of more than 0.94 and less than 1, and wherein the pre-expanded polymer beads have an angle of repose between 31.0° and 50.0°, the angle of repose being measured in accordance with ISO 4324, the method comprising at least the following steps:
- providing raw material polymer beads, on a conveying structure, the raw material polymer beads having a first angle of repose, wherein the raw material polymer beads comprise a polymer base material and at least one additive; and
- moving the conveying structure relative to at least one heating device, wherein the heating device applies via radiation in a specific wavelength range, thermal energy to the raw material polymer beads, wherein the at least one additive exhibits a higher absorption for electromagnetic energy in the specific wavelength range than the polymer base material, thereby generating pre-expanded polymer beads, comprising a cellular structure, wherein the pre-expanded polymer beads have a spherical basic shape defined by a sphericity φ of more than 0.94 and less than 1, and wherein the beads have an angle of repose between 31.0° and 50.0°, the angle of repose being measured in accordance with ISO 4324.

12. The method of claim 11, wherein the expansion ratio in between the density of the raw material polymer beads and the density of the pre-expanded polymer ranges between 1.5 and 5.0.

13. The method of claim 11 or 12, wherein the ratio between the angle of repose of the pre-expanded polymer beads and the first angle of repose of the raw material polymer ranges between 1.15 and 2.00 or less.

14. A particulate polymer material composition, comprising pre-expanded polymer beads according to any one of claims 1-10.

15. A method of processing, e.g. by molding, pre-expanded polymer beads according to any one of claims 1 - 10 to produce a molded part, the method comprising at least the steps of: supplying respective pre-expanded polymer beads into a mold cavity of a molding tool, performing at least one molding step in which the beads are molded, thereby producing a molded part.
